# EUROPÄISCHE PATENTANMELDUNG

(11) **EP 2 523 302 A2**
(43) Veröffentlichungstag der Anmeldung: **14.11.2012**
(21) Anmeldenummer: 12002371.8
(22) Anmeldetag: 30.03.2012
(51) Int. Cl.: H02J 7/00, H02G 3/12, H04M 1/04, H04W 88/00

(54) **Zentralscheibe eines elektrischen Installationsgerätes zum Ablegen und elektrischen Aufladen eines mobilen Audio- und Kommunikationsgerätes**

(30) Priorität: 13.05.2011 DE 102011101411
(71) Anmelder: ABB AG, 68309 Mannheim (DE)
(72) Erfinder: Goldyn, Dirk, 58454 Witten (DE); Diehl, Sven, 57078 Siegen (DE); Dehlen, Sascha, 58540 Meinerzhagen (DE); Szkudlarek, Thomas, 45665 Recklinghausen (DE); Heitz, Bernhard, 44229 Dortmund (DE)

(57) **Zusammenfassung**

Es wird eine Zentralscheibe (1) eines elektrischen Installationsgerätes zum Ablegen und elektrischen Aufladen eines mobilen Audio- und Kommunikationsgerätes (21), mit einer Frontblende (2) und einer daran befestigten Ablageschale (3) vorgeschlagen. Von Wichtigkeit ist, dass die Ablageschale (3) feststehend an der Frontblende (2) befestigt ist und dass die Ablageschale (3) mit mehreren Kabel-Labyrinthen (4, 5) zur Führung mindestens eines Ladekabels (7) versehen ist.

## Beschreibung

Die Erfindung betrifft eine Zentralscheibe eines elektrischen Installationsgerätes zum Ablegen und elektrischen Aufladen eines mobilen Audio- und Kommunikationsgerätes, mit einer Frontblende und einer daran befestigten Ablageschale.

Aus der DE 10 2009 021 449 A1 ist ein elektrisches Installationsgerät mit einem in Form eines Unterputz-Gerätes ausgebildeten und in eine handelsübliche Unterputzdose montierbaren Gerätesockel bekannt, welcher ein Ladegerät und einen elektrischen Anschluss für ein Wechselspannungsnetz aufweist, wobei frontseitig des Gerätesockels ein Ladeanschlussstecker für den Anschluss eines Mobiltelefons und ein Universalhalter für die Ablage/Halterung dieses Mobiltelefons vorgesehen ist. Der Universalhalter dieser Ladestation ist in Form einer um ungefähr 90° nach unten zu öffnenden, über ein unteres Scharniergelenk an einer Zentralscheibe respektive am Gerätesockel befestigten Klappe ausgebildet, welche eine Auflagefläche zur Ablage des Mobiltelefons bildet. Mit der Klappe ist mindestens eine seitliche, um ungefähr 180° schwenkbare Klappe über ein Scharniergelenk verbunden, um derart eine vergrößerte Auflagefläche zur Ablage des Mobiltelefons zu schaffen.

Es ist für unterschiedliche Audio- und Kommunikationsgeräte eine Standard-Anschlussschnittstelle festgelegt worden, um das Problem unterschiedlicher Anschlüsse (Steckvorrichtungen) für das Aufladen unterschiedlicher Typen von mobilen Audio- und Kommunikationsgeräten zu lösen, jedoch gibt es keine Standardisierung für die Position dieser Standard-Anschlussschnittstelle bei derartigen Ladestationen. Es ist somit in den meisten Fällen erforderlich, die Ladestation mit einem Kabel auszustatten, um derart an die verschiedenen Anschlusspositionen zum Laden der verschiedenen Geräte zu gelangen.

Der Erfindung liegt die Aufgabe zugrunde, eine optimierte Zentralscheibe eines elektrischen Installationsgerätes zum Ablegen und elektrischen Aufladen für unterschiedliche mobile Audio- und Kommunikationsgeräte anzugeben.

Diese Aufgabe wird in Verbindung mit den Merkmalen des Oberbegriffes des Anspruch 1 erfindungsgemäß dadurch gelöst, dass die Ablageschale feststehend an der Frontblende befestigt ist und dass die Ablageschale mit mehreren Kabel-Labyrinthen zur Führung mindestens eines Ladekabels versehen ist.

Diese Aufgabe wird alternativ in Verbindung mit den Merkmalen des Oberbegriffes des Anspruch 4 erfindungsgemäß dadurch gelöst, dass die Ablageschale feststehend an der Frontblende befestigt und mit mindestens einer Primär-Ladespule für eine induktive Energieübertragung zu mindestens einer Sekundär-Ladespule eines mobilen Audio- und Kommunikationsgerätes versehen ist.

Selbstverständlich wird die Aufgabe in Verbindung mit den Merkmalen der Oberbegriffe der Ansprüche 1 und 4 auch dadurch gelöst, dass die Ablageschale feststehend an der Frontblende befestigt ist, dass die Ablageschale mit mehreren Kabel-Labyrinthen zur Führung mindestens eines Ladekabels versehen ist und dass die Ablageschale mit mindestens einer Primär-Ladespule für eine induktive Energieübertragung zu mindestens einer Sekundär-Ladespule eines mobilen Audio- und Kommunikationsgerätes versehen ist.

In allen Fällen wird die vorgeschlagene Zentralscheibe komplettiert durch einen Abdeckrahmen und einen Gerätesockel, welcher ein an ein Wechselspannungsnetz angeschlossenes Ladegerät aufweist.

Die mit der Erfindung erzielbaren Vorteile bestehen insbesondere darin, dass das erforderliche Ladekabel in Anpassung an das konkret zu ladende mobile Audio- und Kommunikationsgerät und dessen Anschlussposition zum Laden an der Ablageschale in angepasster Weise verlegt werden kann. Es ist keine aufwändige Aufroll-Mechanik für das Ladekabel erforderlich. Es wird auch zuverlässig verhindert, dass das Ladekabel in störender Weise aus dem elektrischen Installationsgerät heraushängt, was zur Beschädigung des Ladekabels und dessen Anschlussschnittstelle führen kann. Aufgrund der stabilen Konstruktion der Zentralscheibe können gegebenenfalls auch mehrere Audio- und Kommunikationsgeräte gleichzeitig auf der relativ großen Ablageschale abgelegt und aufgeladen werden.

Des Weiteren wird eine formschöne Integration der zum Ablegen und elektrischen Aufladen eines mobilen Audio- und Kommunikationsgerätes dienenden Zentralscheibe in ein Installationsgeräte-Programm ermöglicht. Das vorgeschlagene elektrische/elektronische Installationsgerät kann bezüglich des erforderlichen Abdeckrahmens in Einfach-Kombination oder in Mehrfach-Kombination (z. B. 2fach-Kombination, 3fach-Kombination, 4fach-Kombination) zusammen mit Schaltern, Dimmern, Steckdosen usw. eingesetzt werden. Derartige Installationsgeräte-Programme sind in vielfältiger Art mit unterschiedlichem Design, unterschiedlicher Farbgebung und unter Einsatz unterschiedlicher Materialien (z. B. Kunststoff, Edelstahl) verfügbar. Auf die vorgeschlagene Weise wird das vorgeschlagene elektrische/elektronische Unterputz-Installationsgerät harmonisch in ein Unterputz-Programm integriert und stellt keinen "Fremdkörper" im Hinblick auf Steckdosen, Schalter, Dimmer, Tastsensoren, EIB/KONNEX-Geräte der Hauskommunikation, Bewegungsmelder usw. dar.

Beim Lösungsvorschlag mit induktiver Energieübertragung schließlich ist ein Ladekabel sogar entbehrlich, denn durch Auflegen des mobilen Audio- und Kommunikationsgerätes auf die Ablageschale wird quasi automatisch ohne weitere Maßnahmen seitens des Anwenders der Aufladevorgang gestartet.

Selbstverständlich ist es zur Realisierung einer Einzelgeräte-Lösung auch möglich, die Zentralscheibe selbst mit einem (festen) Abdeckrahmen auszurüsten.

In Weiterbildung der Erfindung kann eine elektrische Anschlussschnittstelle in die Ablagefläche der Ablageschale integriert sein.

Zur Schaffung einer robusten Konstruktion kann mindestens eine Tragrippe zwischen Frontblende und Ablageschale angeordnet sein.

Für die Ertüchtigung eines mobilen Audio- und Kommunikationsgerätes für eine vorstehend angegebene induktive Energieübertragung wird ein Adapter vorgeschlagen, gebildet aus einer Sekundär-Ladespule mit daran angeschlossenem Ladekabel inklusive endseitigem Anschlussstecker für eine elektrische Anschlussschnittstelle des mobilen Audio- und Kommunikationsgerätes.

Wird die Ablageschale sowohl mit der induktiven Energieübertragung als auch mit Kabel-Labyrinthen zur Führung mindestens eines Ladekabels versehen, so erhält der Anwender eine Ladestation, die er selbst entsprechend der konkreten Ausbildung seines mobilen Audio- und Kommunikationsgerätes in vielfältiger Weise nutzen und konfigurieren kann:
- Besitzt der Anwender ein für die induktive Energieübertragung ausgerüstetes mobiles Audio- und Kommunikationsgerät, so wird er die mindestens eine Primär-Ladespule der vorgeschlagenen Ablageschale aktivieren.
- Es besteht auch die Möglichkeit, dass der Anwender den vorgeschlagenen Adapter an seinem mobilen Audio- und Kommunikationsgerät befestigt, um auf diese Weise sein mobiles Audio- und Kommunikationsgerät zu ertüchtigen und die aktivierte Primär-Ladespule der vorgeschlagenen Ablageschale nutzen zu können.
- Bevorzugt der Anwender die Aufladung via Ladekabel, so kann er das Ladekabel je nach Typ des mobilen Audio- und Kommunikationsgerätes respektive je nach Lage der Anschlussschnittstelle am Gerät wahlweise in eines der Kabel-Labyrinthe (rechts oder links) einführen.
- Gegebenenfalls besitzt der Anwender ein mobiles Audio- und Kommunikationsgerät, dessen Anschlussschnittstelle unmittelbar mit der in die Ablagefläche der Ablageschale integrierten Anschlussschnittstelle kontaktiert werden kann.

Die Erfindung wird nachstehend an Hand der in der Zeichnung dargestellten Ausführungsbeispiele näher erläutert. Es zeigen:
- Fig. 1: eine perspektivische Sicht auf eine mit einem Abdeckrahmen komplettierte Zentralscheibe eines elektrischen Installationsgerätes zum Ablegen und elektrischen Aufladen eines mobilen Audio- und Kommunikationsgerätes,
- Fig. 2: eine Ansicht auf die Frontseite einer mit Abdeckrahmen komplettierten Zentralscheibe,
- Fig. 3: eine Seitenansicht einer mit Abdeckrahmen komplettierten Zentralscheibe,
- Fig. 4: eine Ansicht von oben auf eine mit Abdeckrahmen komplettierte Zentralscheibe,
- Fig. 5: eine Ansicht von oben mit einem abgelegten mobilen Audio- und Kommunikationsgerät,
- Fig. 6: eine Ansicht auf die Frontseite mit einem abgelegten mobilen Audio- und Kommunikationsgerät,
- Fig. 7: eine perspektivische Sicht mit einem abgelegten mobilen Audio- und Kommunikationsgerät,
- Fig. 8: eine Ausführungsform mit induktiver Energieübertragung für das Aufladen,
- Fig. 9: ein mobiles Audio- und Kommunikationsgerät für den Betrieb an der Ausführungsform mit induktiver Energieübertragung gemäß Fig. 8.

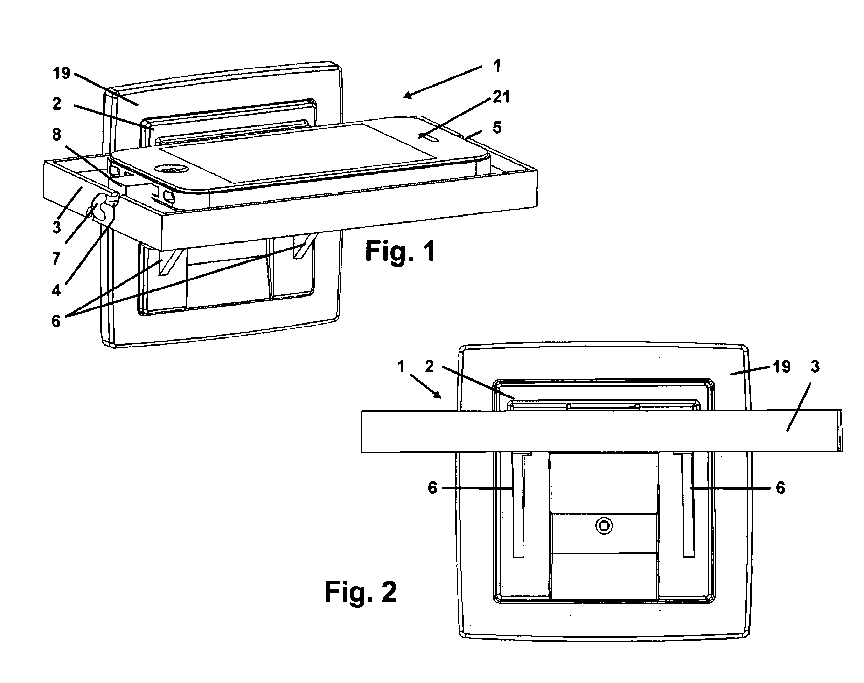

In Fig. 1 ist eine perspektivische Sicht auf eine mit einem Abdeckrahmen komplettierte Zentralscheibe eines elektrischen Installationsgerätes zum Ablegen und elektrischen Aufladen eines mobilen Audio- und Kommunikationsgerätes dargestellt. Die Zentralscheibe 1 setzt sich aus einer Frontblende 2 und einer daran befestigten, rechtwinklig und waagerecht hierzu angeordneten, feststehenden Ablageschale 3 zusammen. Die Frontblende 2 wird vom Abdeckrahmen 19 umrahmt und ist im montierten Zustand an einem (nicht gezeigten) in einer normgerechten Unterputz-Gerätedose installierbarem Gerätesockel befestigt, welcher ein Ladegerät und einen elektrischen Anschluss für ein Wechselspannungsnetz aufweist.

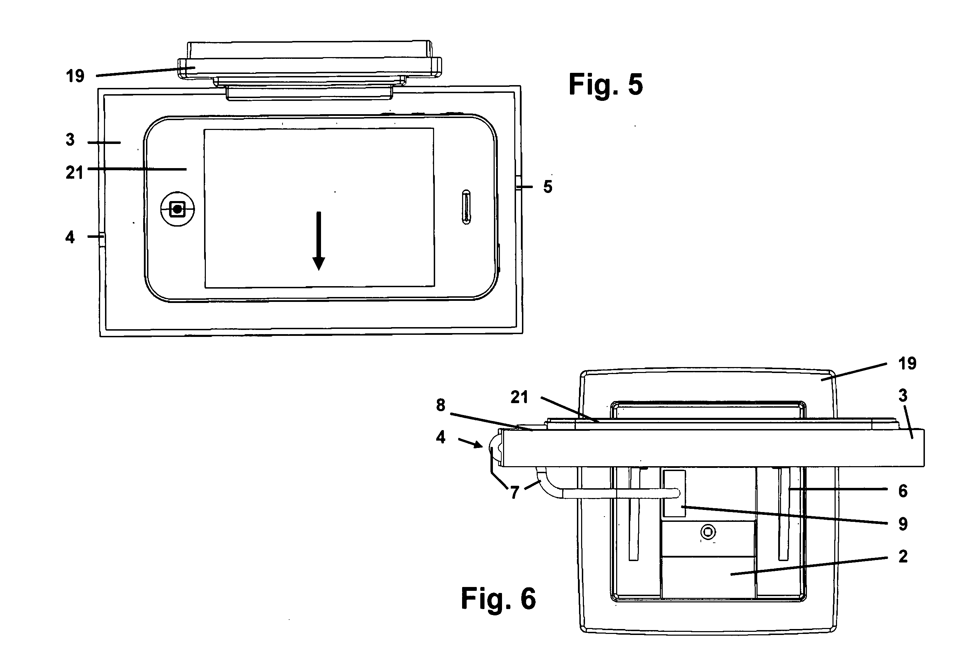

Die in Form einer rechteckförmigen Platte mit umlaufender randseitiger Begrenzung ausgebildete Ablageschale besitzt an ihren beiden Schmalseiten (rechts und links) jeweils ein Kabel-Labyrinth 5, 6. Die Kabel-Labyrinthe 5, 6 dienen zur Aufnahme mindestens eines Ladekabels 7 - siehe hierzu auch Fig. 6 - wobei eine endseitige elektrische Anschlussschnittstelle 8 des Ladekabels 7 in eine korrespondierende Anschlussschnittstelle eines auf die Ablageschale 3 abgelegten mobilen Audio- und Kommunikationsgeräts zum Zwecke des Aufladens einsteckbar ist. Für die mechanisch stabile Befestigung/Abstützung der Ablageschale 3 an der Frontblende 2 sind zwei Tragrippen 6 vorgesehen.

In Fig. 2 ist eine Ansicht auf die Frontseite einer mit Abdeckrahmen komplettierten Zentralscheibe 1 dargestellt. Zu erkennen sind die Frontblende 2 mit der daran über die beiden Tragrippen 6 befestigten Ablageschale 3 sowie der die Frontblende 2 umfassende Abdeckrahmen 19.

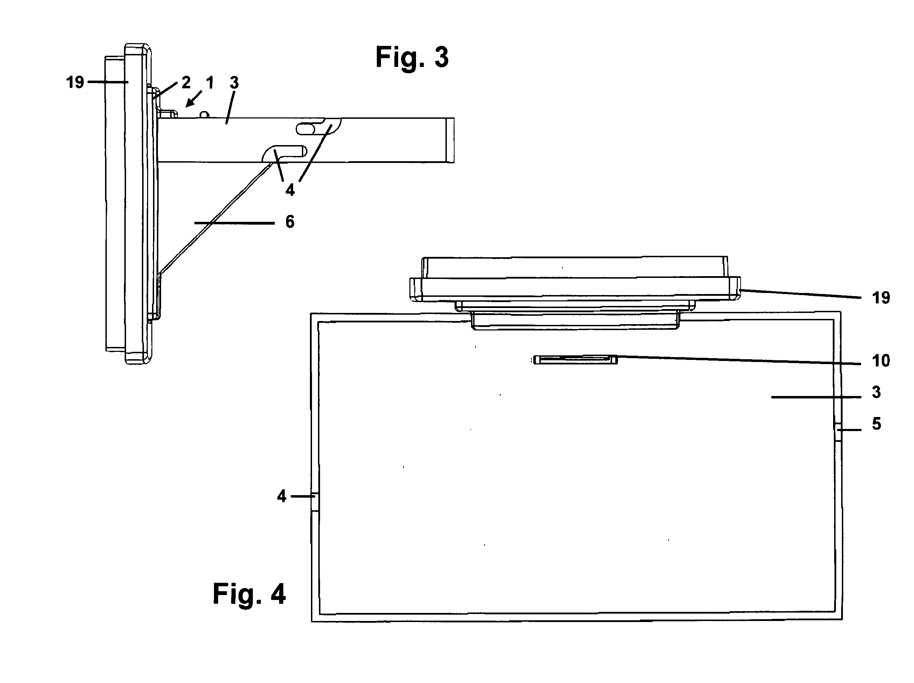

In Fig. 3 ist eine Seitenansicht einer mit Abdeckrahmen 19 komplettierten Zentralscheibe dargestellt. Gut zu erkennen sind zum Einen die stabile Abstützung der Ablageschale 3 über die Tragrippe 6 an der Frontblende 2 der Zentralscheibe 1 und zum Anderen das Kabel-Labyrinth 4, welches insbesondere die Führung eines Ladekabels 7 von der Unterseite der Ablageschale 3 über eine Schmalseite zur Oberseite der Ablageschale 3 mit dem darauf abgelegten mobilen Audio- und Kommunikationsgerät 21 erleichtert. In Fig. 3 ist zur deutliches Darstellung eines Kabel-Labyrinthes kein derartiges Ladekabel eingelegt.

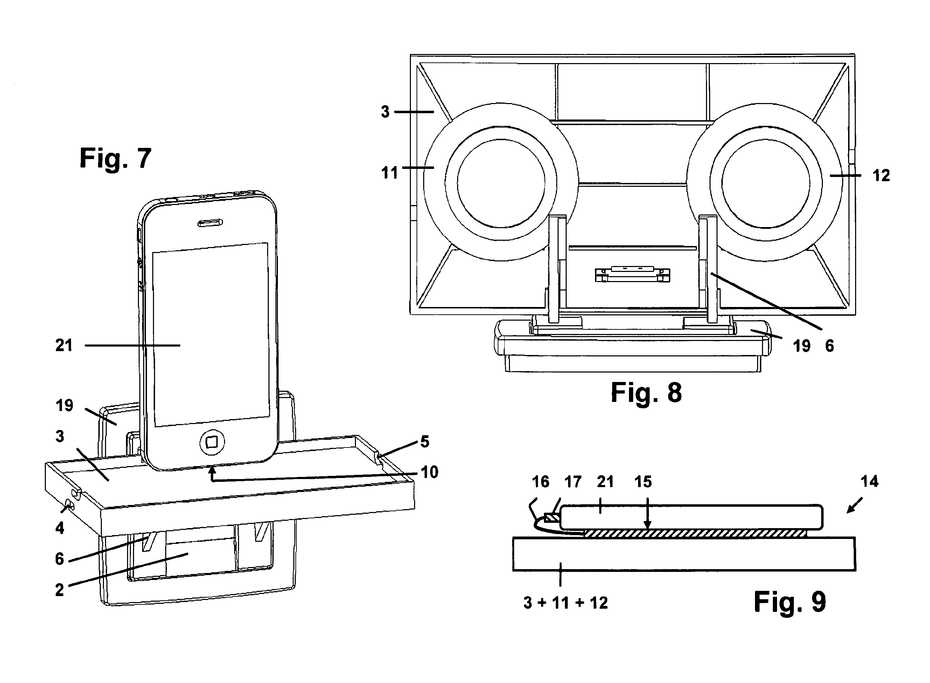

In Fig. 4 ist eine Ansicht von oben auf eine mit Abdeckrahmen komplettierte Zentralscheibe dargestellt. Dabei ist insbesondere gezeigt, dass die Ablageschale 3 mit einer in die Ablagefläche integrierten elektrischen Anschlussschnittstelle 10 versehen ist, mit welcher ein "vertikales (stehendes) Ablegen" eines mobilen Audio- und Kommunikationsgeräts 21 mit einer hierzu korrespondierenden Anschlussschnittstelle des Gerätes realisierbar ist, wie dies beispielhaft in Fig. 7 gezeigt ist. Der besondere Vorteil eines solchen "vertikalen Ablegens" ist darin zu sehen, dass die Ablageschale 3 zusätzlich ausreichend Platz für das "horizontale (liegende) Ablegen" eines weiteres mobilen Audio- und Kommunikationsgeräts bietet. Fig. 4 zeigt des Weiteren die Lage der Kabel-Labyrinthe 4, 5 und den Abdeckrahmen 19.

In Fig. 5 ist eine Ansicht von oben mit einem abgelegten mobilen Audio- und Kommunikationsgerät dargestellt. Dabei ist das gezeigte mobile Audio- und Kommunikationsgerät 21 etwa mittig auf der Ablageschale 3 abgelegt, es ist jedoch abweichend hiervon auch möglich, das mobile Audio- und Kommunikationsgerät 21 in Richtung zur Frontkante der Ablageschale 3 zu verschieben - siehe Pfeilrichtung - um derart eine weitere elektrische Anschlussmöglichkeit an der Anschlussschnittstelle 10 für ein weiteres mobiles Audio- und Kommunikationsgerät 21 zu schaffen. Fig. 5 zeigt des Weiteren die Lage der Kabel-Labyrinthe 4, 5 und den Abdeckrahmen 19.

In Fig. 6 ist eine Ansicht auf die Frontseite mit einem abgelegten mobilen Audio- und Kommunikationsgerät dargestellt. Die Ansicht ähnelt der in Fig. 2 gezeigten Anordnung, jedoch ist zusätzlich der Verlauf des Ladekabels 7 von einer elektrischen Anschlussschnittstelle 9 der Frontblende 2 der Zentralscheibe 1 unterhalb der Ablageschale 3 über das Kabel-Labyrinth 4 bis zur elektrischen Anschlussschnittstelle 8 am mobilen Audio- und Kommunikationsgerät 21 skizziert.

In Fig. 7 ist eine perspektivische Sicht mit einem abgelegten mobilen Audio- und Kommunikationsgerät dargestellt. Das vertikal gegenüber der Ablageschale 3 der Zentralscheibe 1 positionierte mobile Audio- und Kommunikationsgerät 21 kontaktiert die elektrische Anschlussschnittstelle 10 über seine hierzu korrespondierende Anschlussschnittstelle. Das Gewicht des mobilen Audio- und Kommunikationsgeräts 21 wird wiederum über die Ablageschale 3 und die Tragrippen 6 auf die Frontblende 2 weitergegeben. Es ist prinzipiell möglich, jedoch nicht zwingend erforderlich, ein Ladekabel in ein Kabel-Labyrinth 4 und/oder 5 einzuführen. Ob dies erfolgt, kann der Anwender individuell vor Ort und unter konkreter Berücksichtigung des zu ladenden mobilen Audio- und Kommunikationsgeräts entscheiden. Mit anderen Worten kann je nach konkret vorliegendem, zu ladendem mobilen Audio- und Kommunikationsgerät vom Anwender entschieden werden, ob ein Ladekabel 7
- in das Kabel-Labyrinth 4 eingeführt werden soll,
- in das Kabel-Labyrinth 5 eingeführt werden soll,
- in beide Kabel-Labyrinthe 4, 5 eingeführt werden soll,
- in keines der Kabel-Labyrinthe 4, 5 eingeführt werden soll.

Auf diese Weise wird eine große Flexibilität hinsichtlich der Positionierung des Ladekabels 7 ermöglicht, um den unterschiedlich angeordneten Anschlussschnittstellen bei den unterschiedlichen mobilen Audio- und Kommunikationsgeräts 21 entsprechen zu können.

In Fig. 8 ist eine Ausführungsform mit induktiver Energieübertragung für das Aufladen dargestellt. Diese Figur zeigt eine Sicht auf die Unterseite der Ablageschale 3. Bei diesem Ausführungsbeispiel sind zwei Primär-Ladespulen 11, 12 an der Unterseite der Ablageschale 3 angeordnet. Mittels dieser Primär-Ladespulen 11, 12 wird ein Magnetfeld erzeugt, welches zur Energieübertragung zu einer Sekundär-Ladespule eines auf der Ablageschale befindlichen mobilen Audio- und Kommunikationsgeräts dient. Ist das zu ladende mobile Audio- und Kommunikationsgerät nicht mit einer derartigen Sekundär-Ladespule ausgerüstet, bietet sich eine in Fig. 9 skizzierte Lösungsmöglichkeit an.

In Fig. 9 ist ein mobiles Audio- und Kommunikationsgerät für den Betrieb an der Ausführungsform mit induktiver Energieübertragung dargestellt. Dabei ist ein mobiles Audio- und Kommunikationsgerät 21 mit einem Adapter 14 verbunden, welcher eine Sekundär-Ladespule 15 beinhaltet, die über ein Ladekabel 16 mit endseitigem Anschlussstecker 17, z. B. Micro-USB-Standard-Schnittstelle, die Anschlussschnittstelle des mobilen Audio- und Kommunikationsgeräts kontaktiert. Wird ein derart vorbereitetes, mit Adapter 14 bestücktes mobiles Audio- und Kommunikationsgerät auf eine Ablageschale 3 mit Primär-Ladespulen 11, 12 abgelegt, kann der Aufladevorgang durch induktive Energieübertragung mittels Magnetfeld zwischen den Ladespulen 11, 12 und 15 erfolgen.

### Bezugszeichenliste

- 1: Zentralscheibe eines elektrischen Installationsgerätes zum Ablegen und elektrischen Aufladen eines mobilen Audio- und Kommunikationsgerätes
- 2: Frontblende der Zentralscheibe
- 3: feststehende Ablageschale
- 4: Kabel-Labyrinth für Ladekabel-Befestigung
- 5: Kabel-Labyrinth für Ladekabel-Befestigung
- 6: Tragrippen
- 7: Ladekabel mit Steckvorrichtungen
- 8: elektrische Anschlussschnittstelle
- 9: elektrische Anschlussschnittstelle
- 10: elektrische Anschlussschnittstelle
- 11: Primär-Ladespule für induktive Energieübertragungsvorrichtung mittels Magnetfeld
- 12: Primär-Ladespule
- 13: -
- 14: Adapter
- 15: Sekundär-Ladespule
- 16: Ladekabel
- 17: Anschlussstecker (Micro-USB-Standard-Schnittstelle)
- 18: -
- 19: Abdeckrahmen
- 20: -
- 21: mobiles Audio- und Kommunikationsgerät

## Patentansprüche

1. Zentralscheibe (1) eines elektrischen Installationsgerätes zum Ablegen und elektrischen Aufladen eines mobilen Audio- und Kommunikationsgerätes (21), mit einer Frontblende (2) und einer daran befestigten Ablageschale (3), **dadurch gekennzeichnet, dass** die Ablageschale (3) feststehend an der Frontblende (2) befestigt ist und dass die Ablageschale (3) mit mehreren Kabel-Labyrinthen (4, 5) zur Führung mindestens eines Ladekabels (7) versehen ist.

2. Zentralscheibe (1) nach Anspruch 1, **dadurch gekennzeichnet, dass** eine elektrische Anschlussschnittstelle (10) in die Ablagefläche der Ablageschale (3) integriert ist.

3. Zentralscheibe (1) nach Anspruch 1 oder 2, **dadurch gekennzeichnet, dass** mindestens eine Tragrippe (6) zwischen Frontblende (2) und Ablageschale (3) angeordnet ist.

4. Zentralscheibe (1) eines elektrischen Installationsgerätes zum Ablegen und elektrischen Aufladen eines mobilen Audio- und Kommunikationsgerätes (21), mit einer Frontblende (2) und einer daran befestigten Ablageschale (3), **dadurch gekennzeichnet, dass** die Ablageschale (3) feststehend an der Frontblende (2) befestigt und mit mindestens einer Primär-Ladespule (11, 12) für eine induktive Energieübertragung zu mindestens einer Sekundär-Ladespule (15) eines mobilen Audio- und Kommunikationsgerätes (21) versehen ist.

5. Adapter (14) zur Ertüchtigung eines mobilen Audio- und Kommunikationsgerätes (21) für eine in Anspruch 4 angegebene induktive Energieübertragung, gebildet aus einer Sekundär-Ladespule (15) mit daran angeschlossenem Ladekabel (16) inklusive endseitigem Anschlussstecker (17) für eine elektrische Anschlussschnittstelle des mobilen Audio- und Kommunikationsgerätes (21).
